Europäisches Patentamt

European Patent Office

Office européen des brevets

(19)

(11) Veröffentlichungsnummer: **0 004 627**
**A2**

(12) **EUROPÄISCHE PATENTANMELDUNG**

(21) Anmeldenummer: **79100910.3**

(22) Anmeldetag: **26.03.79**

(51) Int. Cl.²: **A 23 L 1/31**
**A 23 B 4/04**

(30) Priorität: **03.04.78 DE 2814295**

(43) Veröffentlichungstag der Anmeldung:
**17.10.79 Patentblatt 79/21**

(84) Benannte Vertragsstaaten:
**BE CH FR GB IT LU NL SE**

(71) Anmelder: **Kott, Rudolf**

**D-8491 Weiding(DE)**

(72) Erfinder: **Kott, Rudolf**

**D-8491 Weiding(DE)**

(74) Vertreter: **Deufel, Paul et al,**
**Patentanwälte MÜLLER-BORé-DEUFEL SCHÖN-HERTEL**
**Siebertstrasse 4**
**D-8000 München 86(DE)**

(54) **Knabberartikel sowie Verfahren zu seiner Herstellung.**

(57) Die Erfindung betrifft Knabberartikel, insbesondere Chips, die aus einem getrockneten gegarten Fleischbrät bestehen, sowie ein Verfahren zu ihrer Herstellung, welches darin besteht, daß ein Fleischbrät gegart, abgekühlt und zu Teilen mit einem hohen Verhältnis Oberfläche/Volumen, insbesondere Chips, zerkleinert wird, worauf die Teilchen getrocknet werden.

Der Vorteil dieser Knabberartikel besteht darin, daß sie im Gegensatz zu in Öl frittierten Knabberartikeln auf der Basis von Kohlehydraten, wie Kartoffelchips, sehr kalorienarm und aufgrund ihres hohen Eiweißgehaltes für die menschliche Ernährung sehr nützlich sind. Sie stellen daher eine wertvolle Bereicherung der Knabberartikelpalette dar.

EP 0 004 627 A2

Croydon Printing Company Ltd.

MÜLLER·BORÉ · DEUFEL · SCHÖN · HERTEL

PATENTANWÄLTE

DR. WOLFGANG MÜLLER-BORÉ
(PATENTANWALT VON 1927-1975)
DR. PAUL DEUFEL, DIPL.-CHEM.
DR. ALFRED SCHÖN, DIPL.-CHEM.
WERNER HERTEL, DIPL.-PHYS.

ZUGELASSENE VERTRETER BEIM EUROPÄISCHEN PATENTAMT
REPRESENTATIVES BEFORE THE EUROPEAN PATENT OFFICE
MANDATAIRES AGRÉÉS PRÈS L'OFFICE EUROPÉEN DES BREVETS

**0004627**

S/K 47-1 EU

BEZEICHNUNG GEÄNDERT
siehe Titelseite

## Knabberartikel

Die bisher bekannten Knabberartikel bestehen überwiegend aus Kartoffel- oder Mehlprodukten, so daß sie einen hohen Anteil an Kohlehydraten aufweisen. Darüber hinaus werden sie häufig in Öl ausgebacken, wie beispielsweise Kartoffelchips, so daß teilweise noch ein erheblicher Fettgehalt, der ebenso wie ein hoher Kohlehydratgehalt unerwünscht ist, hinzukommt.

Ferner sind Knabberartikel bekannt, die aus fetthaltiger Schweineschwarte durch Ausbacken in Öl hergestellt werden.

8 MÜNCHEN 86 · SIEBERTSTR. 4 · POSTFACH 860720 · KABEL: MUEBOPAT · TEL. (089) 474005 · TELEX 5-24285

Auch diese Artikel sind infolge des hohen Fettanteils
sehr kalorienhaltig.

Die Erfindung hat sich daher die Aufgabe gestellt, einen
kalorienarmen und eiweißreichen Knabberartikel zu schaffen, der damit leicht verdaulich ist und nicht wesentlich
zu der täglichen Kalorienaufnahme in Form von "versteckten Kalorien" beiträgt.

Diese Aufgabe wird erfindungsgemäß durch einen Knabberartikel in Form von Teilen mit einem hohen Verhältnis Oberfläche/Volumen, insbesondere in Form von Chips, dadurch
gelöst, daß diese Teile aus einem getrockneten gegarten
Fleischbrät bestehen. Der Wassergehalt dieser Artikel liegt
dabei vorzugsweise unterhalb 15 Gew.-%, insbesondere unterhalb 5 Gew.-%.

Die erfindungsgemäßen Knabberartikel bestehen ferner vorzugsweise überwiegend aus magerem Rindfleisch und können
gegebenenfalls Stoffe pflanzlichen Ursprungs, insbesondere
Getreideprodukte, wie Mehl oder Mehlprodukte, wie beispielsweise Semmelbrösel, in einer Menge bis zu 30 Gew.-% enthalten. Als Stoffe pflanzlichen Ursprungs kommt beispielsweise auch das eiweißreiche Sojabohnenmehl, das in
neuerer Zeit häufig zu Fleischersatzprodukten verarbeitet
wird, infrage. Gegebenenfalls können die erfindungsgemäßen
Knabberartikel auch überwiegend aus derartigen, auf Sojabohnenmehl basierenden Fleischersatzprodukten bestehen.

Zur Herstellung der erfindungsgemäßen Knabberartikel können alle Fleischarten verwendet werden. Es ist ferner möglich, zu ihrer Herstellung auch Fischfleisch einzusetzen.

Vorzugsweise enthalten die erfindungsgemäßen Knabberartikel Milcheiweiß in einer Menge bis zu 10 Gew.-%,
insbesondere in einer Menge von 1 bis 2 Gew.-%.

Außerdem kann man in der Fleischindustrie in herkömmlicher Weise eingesetzte Bindemittel, wie Tripolyphosphate, in Mengen bis zu 0,5 Gew.-%, insbesondere 0,1 bis
0,2 Gew.-%, zusetzen.

Zur Umrötung kann Ascorbinsäure in einer Menge bis zu 0,1
Gew.-%, insbesondere 0,01 bis 0,02 Gew.-%, zugesetzt sein.

Gewürze können in den Artikeln in homogener Verteilung
vorliegen und/oder auf der Oberfläche aufgestäubt sein.

Die erfindungsgemäßen Knabberartikel weisen gemäß einer
bevorzugten Ausführungsform einen Eiweißgehalt von 60
Gew.-%, einen Fettgehalt von maximal 10 Gew.-%, einen
Kohlehydratgehalt von maximal 10 Gew.-%, sowie einen
Wassergehalt von maximal 5 Gew.-% auf, während sich der
Rest aus in Fleischprodukten in üblicher Weise vorliegenden Komponenten zusammensetzt.

Aufgrund des hohen Eiweiß- und niedrigen Fett- und Kohlehydratgehaltes sind diese Knabberartikel leicht verdaulich und kalorienarm, so daß sie bei einem Verzehr zwischen den Mahlzeiten nicht erheblich zu der täglichen Kalorienaufnahme beitragen.

Ihre Knusprigkeit entspricht derjenigen gut ausgebackener Kartoffelchips, wobei jedoch zu ihrer Herstellung
kein Ausbacken in Öl erforderlich ist, gegebenenfalls

jedoch angewendet werden kann, was jedoch im allgemeinen nicht vorzuziehen ist. Sie lassen sich in verschiedenen Geschmacksnuancen würzen und stellen eine wesentliche Bereicherung der derzeit verfügbaren Palette der Knabberartikel dar, die in den letzten Jahren bei den Verbrauchern einen großen Anklang gefunden haben.

Diese neuen Knabberartikel können in der Weise hergestellt werden, daß Fleisch, insbesondere mageres Fleisch, wie mageres Rindfleisch, in herkömmlicher Weise mit einem zur Herstellung von Fleischbrät geeigneten Zerkleinerungsgerät, wie einem Fleischwolf oder Kutter, zerkleinert wird. Dann können die vorstehend erwähnten Zusätze in den angegebenen Mengen zugesetzt werden. Das auf diese Weise erhaltene Brät wird dann in eine zu einer Verkleinerung geeigneten Form überführt, beispielsweise in einen Preßstrang, wobei man sich eines herkömmlichen Extruders, wie einer Ausfüllmaschine oder eines Vakuumfüllers, bedienen kann. Der dabei erhaltene Preßstrang, der zur Herstellung von Chips herkömmlicher Größe vorzugsweise einen Durchmesser von 10 bis 100 mm, insbesondere 40 bis 60 mm, beispielsweise 50 mm, besitzt, wird dann während einer Zeitspanne von 1 bis 2 Stunden, insbesondere 1,5 Stunden, in einem Kochschrank bei 70 bis 80°C gegart, wobei eine Koagulation erfolgt und der Strang die Konsistenz einer Brühwurst annimmt. Dieser Strang wird dann in einer geeigneten Kühlvorrichtung abgekühlt, insbesondere auf 0 bis 2°C, und anschließend einer Schneidevorrichtung zugeführt, die aus diesem Strang Chips mit einer Dicke von vorzugsweise 0,5 bis 2 mm, insbesondere 1 bis 2 mm, abschneidet. Diese Chips werden auf Rosten oder Förderbändern getrocknet, vorzugsweise bei erhöhter Temperatur, beispielsweise bei einer Temperatur von 20 bis 120°C, insbesondere 50 bis 80°C. Es hat sich auch als zweckmäßig erwiesen, die Trocknung in einem Vakuumtrockner bei leichtem Vakuum durchzuführen. Es ist ferner auch eine Gefriertrocknung möglich. Die Trocknung erfolgt zur Einstellung eines Restwassergehaltes von maximal 15 Gew.-%, insbesondere maximal 5 Gew.-%, beispielsweise 3 bis 5 Gew.-%. Die getrockneten Chips können dann noch mit verschiedenen Gewürzen bestäubt werden, wobei diese Bestäubung zusätzlich zu einer bereits erfolgen Würzung des Bräts durchgeführt werden kann.

Gemäß einer anderen Ausführungsform der Erfindung ist es auch möglich, das Brät zu beliebigen Teilen mit einem hohen Verhältnis Oberfläche/Volumen, beispielsweise kleinen Würstchen oder dergleichen zu verformen, diese verformten Teile in der vorstehend beschriebenen Weise zu garen und anschließend zu trocknen.

0004627

## Patentansprüche

1. Knabberartikel in Form von Teilen mit einem hohen Verhältnis Oberfläche/Volumen, insbesondere in Form von Chips, dadurch gekennzeichnet, daß sie aus getrocknetem gegarten Fleischbrät bestehen.

2. Artikel nach Anspruch 1, dadurch gekennzeichnet, daß ihr Wassergehalt unter 15 Gew.-%, insbesondere unter 5 Gew.-%, liegt.

3. Artikel nach den Ansprüchen 1 bis 2, dadurch gekennzeichnet, daß sie aus magerem Rindfleisch bestehen.

4. Artikel nach den Ansprüchen 1 bis 3, dadurch gekennzeichnet, daß sie Stoffe pflanzlichen Ursprungs, insbesondere Getreideprodukte, in einer Menge bis zu 30 Gew.-% enthalten.

5. Artikel nach Anspruch 4, dadurch gekennzeichnet, daß die Getreideprodukte aus Mehl oder Mehlprodukten, wie Semmelbrösel, bestehen.

6. Artikel nach den Ansprüchen 1 bis 5, dadurch gekennzeichnet, daß sie Milcheiweiß in einer Menge bis zu 10 Gew.-%, insbesondere 1 bis 2 Gew.-%, enthalten.

7. Artikel nach den Ansprüchen 1 bis 6, dadurch gekennzeichnet, daß sie übliche Bindemittel, wie Tripolyphosphate, in Mengen bis zu 0,5 Gew.-%, insbesondere 0,1 bis 0,2 Gew.-%, enthalten.

8. Artikel nach den Ansprüchen 1 bis 7, dadurch gekennzeichnet, daß sie Ascorbinsäure in einer Menge bis zu 0,1 Gew.-%, insbesondere 0,01 bis 0,02 Gew.-%, enthalten.

9. Artikel nach den Ansprüchen 1 bis 8, dadurch gekennzeichnet, daß sie in homogener Verteilung und/oder in aufgestäubter Form Gewürze enthalten.

10. Verfahren zur Herstellung von Knabberartikeln gemäß den Ansprüchen 1 bis 9, dadurch gekennzeichnet, daß ein in einer zu einer Verkleinerung geeigneten Form vorliegendes Fleischbrät, dem gegebenenfalls Stoffe pflanzlichen Ursprungs, insbesondere Getreideprodukte, wie Mehl oder Mehlprodukte, Milcheiweiß, übliche Bindemittel, Ascorbinsäure und/oder Gewürze zugesetzt worden sind, gegart, abgekühlt und zu Teilen mit einem hohen Verhältnis Oberfläche/Volumen zerkleinert wird, worauf die erhaltenen Teile getrocknet werden.

11. Verfahren nach Anspruch 10, dadurch gekennzeichnet, daß zur Herstellung von Chips ein Fleischbrätpreßstrang gegart, abgekühlt und zu Chips zerkleinert wird, worauf die Chips bei erhöhter Temperatur getrocknet werden.

12. Verfahren nach Anspruch 11, dadurch gekennzeichnet, daß der verwendete Preßstrang eine für die Herstellung von Chips charakteristische Form, insbesondere einen Durchmesser von 10 bis 100 mm, insbesondere 40 bis 60 mm, besitzt.

13. Verfahren nach Anspruch 12, dadurch gekennzeichnet, daß der Preßstrang in Wasser mit einer Temperatur von 40 bis 80°C während einer Zeitspanne von 1 bis 2 Stunden gegart wird.

14. Verfahren nach den Ansprüchen 12 bis 13, dadurch gekennzeichnet, daß der Preßstrang nach dem Garen auf eine Temperatur von 0 bis 2°C abgekühlt wird.

15. Verfahren nach den Ansprüchen 12 bis 14, dadurch gekennzeichnet, daß der Preßstrang zu Chips mit einer Dicke von 0,5 bis 2 mm zerkleinert wird.

16. Verfahren nach den Ansprüchen 10 bis 15, dadurch gekennzeichnet, daß das Trocknen in Luft bei einer Temperatur von 20 bis 120°C, insbesondere 50 bis 80°C, durchgeführt wird.

17. Verfahren nach Anspruch 16, dadurch gekennzeichnet, daß das Trocknen in einem Vakuumtrockner unter leichtem Vakuum durchgeführt wird.

18. Verfahren nach den Ansprüchen 10 bis 17, dadurch gekennzeichnet, daß die Teile nach dem Trocknen mit Gewürzen bestäubt werden.

19. Abänderung des Verfahrens nach den Ansprüchen 10 bis 18, dadurch gekennzeichnet, daß das Fleischbrät zu Teilen mit einem hohen Verhältnis Oberfläche/Volumen verformt wird, worauf die erhaltenen Teile gegart und getrocknet werden.